# EUROPEAN PATENT APPLICATION

(11) **EP 1 072 565 A2**
(43) Date of publication of application: **31.01.2001**
(21) Application number: 00306347.6
(22) Date of filing: 26.07.2000
(51) Int. Cl.: C03C 25/40

(54) **Treatment agent composition for glass fiber-braid coated electrical wire**

(30) Priority: 26.07.1999 JP 21089599
(71) Applicant: Dow Corning Toray Silicone Co., Ltd., Tokyo (JP)
(72) Inventor: Ota, Kenji,, Ichihara-shi, Chiba Prefecture (JP); Nakamura, Akito, Ichihara-shi, Chiba Prefecture (JP)
(74) Representative: Kyle, Diana

(57) **Abstract**

A treatment agent composition for a glass fiber-braid coated electrical wire that has excellent permeability into the glass fiber braid, binds the glass fibers and the glass fiber braid extremely well, and gives a glass fiber-braid coated electrical wire with no surface tackiness. The composition comprises (A) a diorganopolysiloxane which has a viscosity of 100 to 100,000 mPa · s at 25°C and contains at least two alkenyl groups per molecule, (B) an optional organopolysiloxane resin, (C) an inorganic filler, (D) an organopolysiloxane which contains at least three silicon atom-bonded hydrogen atoms per molecule (E) a platinum-series catalyst, and (F) an organotitanium compound.

## Description

The present invention relates to a treatment agent composition for a glass fiber-braid coated electrical wire. More particularly, it relates to a treatment agent composition for a glass fiber-braid coated electrical wire that has excellent permeability into the glass fiber-braid and binds the glass fibers and the glass fiber braid extremely well, and has no surface tack.

A silicone rubber-covered electrical wire has a structure in which a core wire is covered with silicone rubber, and the surface layer thereof is covered with a glass fiber braid (a covering of densely intertwined glass fibers). This glass fiber braid is treated with a glass fiber treatment agent called a silicone wax, a silicone rubber dispersion, or the like in order to improve electrical insulation and bind the glass fibers and the glass fiber braid. However, the use of an organic solvent such as toluene or xylene is essential with all of these glass fiber treatment agents, which poses a problem in terms of environmental pollution. Studies have therefore been conducted into glass fiber treatment agents that do not require the use of an organic solvent. For instance, Japanese Laid-Open Patent Application S51-26399 proposes a glass fiber treatment agent composition composed of a liquid silicone rubber composition whose main components are an alkenyl group-containing diorganopolysiloxane and an organopolysiloxane containing silicon atom-bonded hydrogen atoms, and which cures in the presence of a platinum-series catalyst. This composition substantially does not require the use of an organic solvent, and has therefore been hailed as a solution to the above problem, but because a glass fiber-braid coated electrical wire treated with this composition is tacky on its surface, the wire is difficult to wind, and the glass fiber-braid coated electrical wires stick together during storage, among other problems. Also, the ability of this composition to bind the glass fibers and the glass fiber braid is not necessarily satisfactory, which leads to problems such as the fraying of the glass fiber braid or the unraveling of the glass fibers from the cut end of the glass fiber braid when the covering layer of the glass fiber-braid coated electrical wire is peeled off.

The inventors arrived at the present invention as a result of research aimed at solving the above problems. Specifically, it is an object of the present invention to provide a treatment agent composition for a glass fiber-braid coated electrical wire that has excellent permeability into the glass fiber braid, binds the glass fibers and the glass fiber braid extremely well, and can give a glass fiber-braid coated electrical wire with no surface tackiness.

A treatment agent composition for a glass fiber-braid coated electrical wire comprising
(A) 100 weight parts of a diorganopolysiloxane which has a viscosity of 100 to 100,000 mPa· s at 25°C and contains at least two alkenyl groups per molecule;
(B) 0 to 100 weight parts organopolysiloxane resin;
(C) 5 to 100 weight parts inorganic filler;
(D) an organopolysiloxane which contains at least three silicon atom-bonded hydrogen atoms per molecule in an amount such that the ratio of the number of moles of silicon atom-bonded hydrogen atoms in this component to the number of moles of alkenyl groups in component A is between 0.6:1 and 20:1;
(E) a platinum-series catalyst in an amount of from 0.1 to 500 weight parts as platinum-series metal per 1,000,000 weight parts of component A; and
(F) 0.1 to 5 weight parts organotitanium compound.

A treatment agent composition for a glass fiber-braid coated electrical wire comprising
(A) 100 weight parts of a diorganopolysiloxane which has a viscosity of 100 to 100,000 mPa· s at 25°C and contains at least two alkenyl groups per molecule;
(B) 0 to 100 weight parts organopolysiloxane resin;
(C) 5 to 100 weight parts inorganic filler;
(D) an organopolysiloxane which contains at least three silicon atom-bonded hydrogen atoms per molecule in an amount such that the ratio of the number of moles of silicon atom-bonded hydrogen atoms in this component to the number of moles of alkenyl groups in component A is between 0.6:1 and 20:1;
(E) a platinum-series catalyst in an amount of from 0.1 to 500 weight parts as platinum-series metal per 1,000,000 weight parts of component A; and
(F) 0.1 to 5 weight parts organotitanium compound.

The diorganopolysiloxane used as component A in the present invention is the main component of the composition, and must have at least two alkenyl groups per molecule. This diorganopolysiloxane is a substantially linear organopolysiloxane described by the average unit formula RₙSiO_{(4-n)/2}, where R is a substituted or unsubstituted monovalent hydrocarbon group, examples of which include alkyl groups such as methyl, ethyl, and propyl; alkenyl groups such as vinyl and allyl; aryl groups such as phenyl and tolyl; and halogenated alkyl groups such as 3,3,3-trifluoropropyl; and n is a number from 1.9 to 2.1. The viscosity of this diorganopolysiloxane at 25°C must be between 100 and 100,000 mPa· s, and preferably between 1000 and 50,000 mPa· s. Specific examples of this component include dimethylpolysiloxane capped at both ends with dimethylvinylsiloxy groups, a dimethylsiloxane· methylvinylsiloxane copolymer capped at both ends with dimethylvinylsiloxy groups, a dimethylsiloxane· methylphenylsiloxane copolymer capped at both ends with dimethylvinylsiloxy groups, and a methyl(3,3,3-trifluoropropyl)siloxane· methylvinylsiloxane copolymer capped at both ends with dimethylvinylsiloxy groups.

The organopolysiloxane resin used as component B serves to enhance the adhesion with and permeability into the glass fiber braid. Examples of this organopolysiloxane resin include an organopolysiloxane resin composed of (CH₃)₃SiO_{1/2} units and SiO_{4/2} units, an organopolysiloxane resin composed of (CH₃)₃SiO_{1/2} units, (CH₂=CH)SiO_{3/2} units, and SiO_{4/2} units, an organopolysiloxane resin composed of (CH₂=CH)(CH₃)₂SiO_{1/2} units and SiO_{4/2} units, and an organopolysiloxane resin composed of (CH₂=CH)(CH₃)₂SiO_{1/2} units, (CH₂=CH)SiO_{3/2} units, and SiO_{4/2} units. Of these, an organopolysiloxane resin containing vinyl groups is preferred. This component may be in the form of either a liquid or a solid at normal temperature, but is preferably one that is miscible with component A. The amount in which this component is used is 0 to 100 weight parts per 100 weight parts component A. In terms of increasing permeability into the glass fiber braid and enhancing thin film coatability, a range of 5 to 80 weight parts is preferred, and 10 to 80 weight parts is even better.

The inorganic filler used as component C can be any substance known in the past as a filler for silicone rubbers. Examples of this inorganic filler include fumed silica, precipitated silica, surface-treated silica in which the surface of one of these types of silica has been treated with an organochlorosilicone, organohydroxysilane, hexaorganodisilazane, organocyclopolysiloxane, or the like, and other such reinforcing silicas; and fumed titanium oxide, pulverized quartz, diatomaceous earth, iron oxide, aluminum oxide, calcium carbonate, magnesium carbonate, and other such semi-reinforcing fillers or non-reinforcing fillers. Of these, a reinforcing silica with a BET specific surface area of at least 50 m²/g is preferred, and a surface-treated silica produced by treating the surface of one of these reinforcing silicas is even better. The amount in which this component is used will vary with the type of inorganic filler, but is generally between 5 and 100 weight parts per 100 weight parts of component A. When a reinforcing silica is used as this inorganic filler, the amount in which this component is used will be between 5 and 15 weight parts per 100 weight parts of component A. This is because there will be a decrease in permeability into the glass fiber braid if the reinforcing silica is used in an amount over 15 weight parts, but mechanical strength will decrease if the amount is less than 5 weight parts.

The organopolysiloxane which contains at least three silicon atom-bonded hydrogen atoms per molecule used as component D is a crosslinking agent. Examples of this organopolysiloxane include methylhydrogenpolysiloxane capped at both ends with trimethylsiloxy groups, a dimethylsiloxane· methylhydrogensiloxane copolymer capped at both ends with trimethylsiloxy groups, a dimethylsiloxane· methylphenylsiloxane· methylhydrogensiloxane copolymer capped at both ends with trimethylsiloxy groups, cyclic methylhydrogenpolysiloxane, and a copolymer composed of dimethylhydrogensiloxane units and SiO_{4/2} units. This component usually has a viscosity at 25°C of 1 to 1000 mPa· s. The amount in which this component is used is such that the ratio of the number of moles of silicon atom-bonded hydrogen atoms in this component to the number of moles of alkenyl groups in component A is between 0.6:1 to 20:1, with a range of 1:1 to 10:1 being preferable.

The platinum-series catalyst used as component E in the present invention is a catalyst for curing the present composition, examples of which include particulate platinum, platinum black, chloroplatinic acid, olefin complexes of chloroplatinic acid, alcohol solutions of chloroplatinic acid, complexed compounds of chloroplatinic acid and alkenylsiloxanes, rhodium compounds, and palladium compounds. The amount in which this component is added is 0.1 to 500 weight parts, and preferably 1 to 50 weight parts, as platinum-series metal per 1,000,000 weight parts of component A.

The organotitanium compound used as component F is essential for enhancing the adhesion of the present composition to the glass fiber braid and reducing the surface tack thereof. Examples of this organotitanium compound include tetraisopropyl titanate, tetrabutyl titanate, tetraoctyl titanate, and other organotitanic esters; and diisopropoxytitanium bis(ethylacetoacetate) and other titanium chelate compounds. The amount in which this component is used is 0.1 to 5 weight parts per 100 weight parts component A. This is because the storage stability of the present composition will deteriorate if the usage amount is over 5 weight parts, but if this amount is less than 0.1 weight part, there will be no effect in terms of reducing the surface tack of the glass fiber braid or improving the binding of the glass fibers and the glass fiber braid.

In addition to the above-mentioned components A to F, it is favorable to add a curing retardant such as 3-methyl-1-butyn-3-ol, 3,5-dimethyl-1-hexyn-3-ol, phenylbutynol, and other such alkyne alcohols; 3-methyl-3-penten-1-yne, 3,5-dimethyl-3-hexen-1-yne, and other such enyne compounds; tetramethyltetrahexenylcyclotetrasiloxane; methyltris(3-methyl-1-butyn-3-oxy)silane, or benzotriazole to the present composition. The amount in which this curing retardant is added is usually between 0.01 and 10 weight parts per 100 weight parts component A.

The present composition can be easily manufactured by uniformly mixing the above components A to F by themselves or, if needed, along with other components. Examples of the apparatus for mixing these components include a Ross mixer, a continuous kneading extruder, and other such mixing devices or kneading devices.

The present composition can be applied to the glass fiber-braid coated electrical wire, for example, by dipping the untreated glass fiber-braided electrical wire in a bath of the present composition, then putting this product in a heating furnace to heat cure it at a temperature higher than the curing temperature of the composition. The heat curing temperature is usually between 130 and 230°C.

The present composition as described above has excellent permeability into the glass fiber braid of a glass fiber-braid coated electrical wire, binds the glass fibers and the glass fiber braid extremely well, and has no surface tack. Accordingly, a glass fiber-braid coated electrical wire to which the present composition has been applied will be easy to wind and the wires will not stick together during storage. Also, when the wire is cut and the covering layer peeled off, there will be no fraying of the glass fiber braid or unraveling of the glass fibers from the cut end of the wire.

### Working Examples

The present invention will now be described through working examples. In these examples, Vi stands for a vinyl group and Me for a methyl group. The term "parts" when referring to amounts means weight parts. Viscosities are those measured at 25°C.

The treatment of the glass fiber-braid coated electrical wires in the working example was carried out as follows. An untreated glass fiber-braid coated electrical wire (produced by braiding glass fibers over a silicone rubber-covered electrical wire) was put in a vessel filled with the treatment agent composition, then passed through wire holes in a coating jig (the diameter of these wire holes was slightly larger than the diameter of the glass fiber-braid coated electrical wire) so that the amount of coating of the glass fiber-braid coated electrical wire with the treatment agent composition would be uniform, after which this wire was put in a heating oven and heat cured for 5 minutes at 180°C.

Working Example 1. 100 Parts of a dimethylpolysiloxane capped at both ends of the molecular chain with dimethylvinylsiloxy groups and having a viscosity of 2000 mPa · s was put into a Ross mixer along with 18 parts of a vinyl group-containing methylpolysiloxane resin (vinyl group content: 5.6 wt%) with a viscosity of 230 mPa· s and composed of Vi(Me)₂SiO_{1/2} units and SiO_{4/2} units. Then, 18 parts of precipitated silica with a BET specific surface area of 200 m²/g, 3.5 parts hexamethyldisilazane (used as a silica surface treatment agent), and 2 parts water were added and mixed until uniform, after which the system was heat treated under a vacuum to prepare a liquid silicone rubber base compound.

To 100 parts of this liquid silicone rubber base compound were then added 6 parts of a dimethylsiloxane· methylhydrogensiloxane copolymer capped at both ends with trimethylsiloxy groups and having a viscosity of 22 mPa· s (silicon atom-bonded hydrogen atom content: 1.5 wt%), 0.5 part of a complex of chloroplatinic acid and divinyltetramethyldisiloxane (an amount such that the amount of platinum metal was 40 ppm), 0.4 part 3,5-dimethyl-1-hexyn-3-ol (used as a curing inhibitor), and 0.25 part tetrabutyl titanate, and this system was uniformly mixed to prepare a treatment agent composition. This composition had a viscosity of 26,000 mPa· s. An untreated glass fiber-braid coated electrical wire was treated with this composition, and the bindability of the glass fibers and the surface tack were measured. The bindability of the glass fibers was measured by cutting the electrical wire with scissors and visually checking for unraveling of the glass fibers at the cut end. Surface tack was evaluated by touch.

Comparative Example 1. A glass fiber-braid coated electrical wire treatment agent composition was prepared in the same manner as in Working Example 1, except that the tetrabutyl titanate was not added as in Working Example 1. The characteristics of a glass fiber-braid coated electrical wire treated with this composition were measured in the same manner as in Working Example 1, the results of which are given in Table 1 below.

Working Example 2. 100 Parts of a dimethylpolysiloxane capped at both ends of the molecular chain with dimethylvinylsiloxy groups and having a viscosity of 12,000 mPa· s were put into a Ross mixer along with 20 parts of a vinyl group-containing methylpolysiloxane resin (vinyl group content: 5.6 wt%) with a viscosity of 230 mPa· s and composed of Vi(Me)₂SiO_{1/2} units and SiO_{4/2} units. Then, 20 parts of fumed silica with a BET specific surface area of 200 m²/g that had been surface treated in advance with hexamethyldisilazane were added and mixed until uniform to prepare a liquid silicone rubber base compound. To 100 parts of this liquid silicone rubber base compound were then added 3 parts of a dimethylsiloxane· methylhydrogensiloxane copolymer capped at both ends with trimethylsiloxy groups (silicon atom-bonded hydrogen atom content: 1.57 wt%), 2 parts diisopropoxytitanium bis(ethylacetoacetate), a platinum complex of chloroplatinic acid and divinyltetramethyldisiloxane (an amount such that the amount of platinum metal was 40 ppm), and 0.1 part methyltris(3-methyl-1-butyn-3-oxy)silane (used as a curing inhibitor), and this system was uniformly mixed. This composition had a viscosity of 58,000 mPa· s. The characteristics of a glass fiber-braid coated electrical wire treated with this composition were measured in the same manner as in Working Example 1, the results of which are given in Table 2 below.

Comparative Example 2. A glass fiber-braid coated electrical wire treatment agent composition was prepared in the same manner as in Working Example 2, except that the diisopropoxytitanium bis(ethylacetoacetate) was not added as in Working Example 2. The characteristics of a glass fiber-braid coated electrical wire treated with this composition were measured in the same manner as in Working Example 2, the results of which are given in Table 2 below.

**Table 1**

| | Working Example 1 | Comparative Example 1 |
|---|---|---|
| Surface tack | none | sticky |
| Bindability of glass fibers | good (no unraveling of glass fibers) | poor (unraveling of glass fibers) |

**Table 2**

| | Working Example 2 | Comparative Example 2 |
|---|---|---|
| Surface tack | none | sticky |
| Bindability of glass fibers | good (no unraveling of glass fibers) | poor (unraveling of glass fibers) |

## Claims

1. A treatment agent composition for a glass fiber-braid coated electrical wire comprising
(A) 100 weight parts of a diorganopolysiloxane which has a viscosity of 100 to 100,000 mPa· s at 25°C and contains at least two alkenyl groups per molecule;
(B) 0 to 100 weight parts organopolysiloxane resin;
(C) 5 to 100 weight parts inorganic filler;
(D) an organopolysiloxane which contains at least three silicon atom-bonded hydrogen atoms per molecule in an amount such that the ratio of the number of moles of silicon atom-bonded hydrogen atoms in this component to the number of moles of alkenyl groups in component A is between 0.6:1 and 20:1;
(E) a platinum-series catalyst in an amount of from 0.1 to 500 weight parts as platinum-series metal per 1,000,000 weight parts of component A); and
(F) 0.1 to 5 weight parts organotitanium compound.

2. The treatment agent composition of Claim 1, where component F is selected from the group consisting of organotitanic ester and titanium chelate compounds.

3. The treatment agent composition of Claim 1, where component (F) is tetrabutyl titanate.

4. The treatment agent composition of Claim 1, where component (F) is diisopropoxytitanium bis(ethylacetoacetate).

5. The treatment agent composition of any of Claims 1 to 4, where component (A) has a viscosity at 25°C between 1000 and 50,000 mPa·s.

6. The treatment agent composition of any of Claims 1 to 5, where component (B) is added in amount in the range of 10 to 80 weight parts.

7. The treatment agent composition of any of Claims 1 to 6, where the ratio of the number of moles of silicon atom-bonded hydrogen atoms in component (D) to the number of moles of alkenyl groups in component (A) is within a range of 1:1 to 10:1.

8. The treatment agent composition of any of Claims 1 to 7, further comprising 0.01 to 10 weight parts of a cure retardant.

9. A glass fiber-braid coated electrical wire treated with a composition as defined in any of Claims 1 to 8.
